# FASCICULE DE BREVET EUROPEEN

(11) **EP 2 188 139 B1**
(45) Date de publication et mention de la délivrance du brevet: **06.11.2013**
(21) Numéro de dépôt: 08837361.8
(22) Date de dépôt: 12.09.2008
(51) Int. Cl.: B60C 23/06, B60C 23/04

(54) **DISPOSITIF ET PROCEDE D'ESTIMATION DE L'ETAT DE GONFLAGE D'UN PNEUMATIQUE**
VORRICHTUNG UND DEREN VERFAHREN ZUM ABSCHÄTZEN DES ZUSTANDES EINES REIFENS
DEVICE AND METHOD FOR ESTIMATING THE INFLATION STATE OF A TYRE

(30) Priorité: 12.09.2007 FR 0757523
(43) Date de publication de la demande: 26.05.2010
(73) Titulaire: Renault S.A.S., 92100 Boulogne-Billancourt (FR)
(72) Inventeur: ANDRIEUX, Arnaud, F-62140 Hesdin (FR); CHABANON, Christian, F-78180 Montigny Le Bretonneux (FR)
(74) Mandataire: Alizon, Robert
(86) Numéro de dépôt international: PCT/FR2008/051645
(87) Numéro de publication internationale: WO 2009/047431

(56) Documents cités:
- EP-A- 0 931 679
- WO-A-2007/020202
- US-A1- 2003 030 553

## Description

La présente invention a pour domaine d'application la sécurité des véhicules à pneumatiques, et plus particulièrement l'estimation du gonflage et la détection de crevaison embarqués desdits pneumatiques.

La demande de brevet US 2004/0133400 décrit un système et un procédé d'estimation de l'état de gonflage d'un des quatre pneumatiques d'un véhicule. Lesdits procédé et système sont limités par les conditions de calcul, ligne droite, vitesse constante, un seul pneumatique subissant une perte de pression. De même, le document ne divulgue pas de détection d'une perte lente de pression.

La demande de brevet US2005/0171723 décrit un système d'estimation de l'état de gonflage d'un pneumatique utilisant une analyse spectrale des modes de vibration du pneumatique entre 20 et 40Hz. Le pic de fréquence ainsi obtenu se décale en fréquence selon l'état de gonflage du pneumatique. Les limitations dudit système d'estimation sont une difficulté variable d'obtention du mode de vibration requis, difficulté variable selon le rôle moteur ou non du pneumatique, l'état de la chaussée ou le coté de la chaussée emprunté.

La demande de brevet internationale WO2005/005173 divulgue un procédé et un système de détermination de l'écart du diamètre dudit pneumatique par rapport au diamètre attendu, ainsi que l'étude de la vibration dudit pneumatique. De ces deux informations, le procédé et le système déterminent la pression dudit pneumatique. Le procédé et le système de détermination ne sont actifs que sur les lignes droites, et réclament un traitement du signal lourd et difficile à mettre en oeuvre. Le document WO2007/020202 divulgue de même un système d'estimation de l'état de gonflage en accord avec le préambule de la revendication 1.

Les systèmes et procédés décrits dans les documents précédents présentent de fortes limitations liées aux conditions d'utilisation. Notamment, il est requis des conditions de roulages stabilisées telles qu'un déplacement en ligne droite et une vitesse stabilisée, limitant l'utilité de tels systèmes sur les trajets couramment réalisés. De plus certains procédés et systèmes cités font appel à une comparaison entre l'état du pneumatique surveillé avec l'état d'au moins un des autres pneumatiques. Il en ressort qu'une perte de pression simultanée du pneumatique surveillé et des pneumatiques utilisés en référence mène à un dysfonctionnement de la détection.

La présente invention a pour objet un dispositif d'estimation du gonflage de pneumatique, embarqué sur un véhicule amélioré et notamment, ne nécessitant pas de capteur autre qu'un capteur de vitesse.

L'invention a également pour objet un dispositif d'estimation du gonflage de pneumatique ne fonctionnant pas sur une comparaison de l'état de gonflage d'au moins deux pneumatiques.

L'invention a également pour objet la détection d'une perforation du pneumatique d'un véhicule équipé d'un dispositif tel que proposé.

Un dispositif de détection de l'état du gonflage d'un pneumatique d'au moins une roue de véhicule automobile comprend
une mémoire contenant une signature de référence constituée par un signal périodique correspondant à un gonflage et à des conditions de roulage de référence,
un moyen de détermination d'une signature courante constituée par un signal périodique correspondant à un gonflage et à des conditions de roulage courants,
un moyen de comparaison entre la signature courante et la signature de référence, capable d'émettre en sortie un signal dépendant d'un écart entre la signature courante et la signature de référence.

Le dispositif de détection peut comprendre en outre un capteur de la vitesse de rotation de ladite roue, muni de marqueurs angulaires et d'un moyen de détection desdits marqueurs angulaires. Le moyen de détermination d'une signature courante est capable de déterminer un signal dépendant de l'état de gonflage du pneumatique, en fonction d'un signal reçu du capteur de vitesse et dépendant du passage en succession des marqueurs angulaires.

Le moyen de comparaison entre la signature courante et la signature de référence peut comprendre un dispositif de localisation de la position angulaire des marqueurs correspondant à la localisation de l'augmentation de pression détectée.

Un procédé de détection de l'état de gonflage d'un pneumatique d'au moins une roue de véhicule automobile comprend des étapes au cours desquelles :
on mémorise une signature de référence, constituée par un signal périodique correspondant à un gonflage et à des conditions de roulage de référence,
on détermine une signature courante d'une roue constituée par un signal périodique correspondant à un gonflage et à des conditions de roulage courants,
on détermine un écart entre ladite signature courante et la signature de référence mémorisée,
et on en déduit l'état de gonflage du pneumatique.

On peut déterminer l'écart entre la signature de référence et la signature courante en réalisant la différence point à point entre la signature courante et la signature de référence.

On peut déterminer en temps réel l'écart entre la signature courante et la signature de référence mémorisée.

Le procédé de détection peut être appliqué à l'ensemble des pneumatiques du véhicule. On peut alors déterminer l'écart entre la signature courante et la signature de référence mémorisée pour chaque pneumatique de façon individuelle.

Un signal de détection d'une perforation peut être émis si on détecte une augmentation ponctuelle et limitée dans le temps de l'écart entre la signature de référence et la signature courante.

Le procédé de détection peut être appliqué à un véhicule équipé de pneumatiques cloutés. La signature de référence intègre alors la contribution des clous du pneumatique.

D'autres buts, caractéristiques et avantages apparaîtront à la lecture de la description suivante donnée uniquement en tant qu'exemple non limitatif et faite en référence aux dessins annexés sur lesquels :
- la figure 1 illustre les principaux organes d'un dispositif de détection de l'état de gonflage d'un pneumatique, et
- la figure 2 illustre les principales étapes d'un procédé de détection de l'état de gonflage d'un pneumatique.

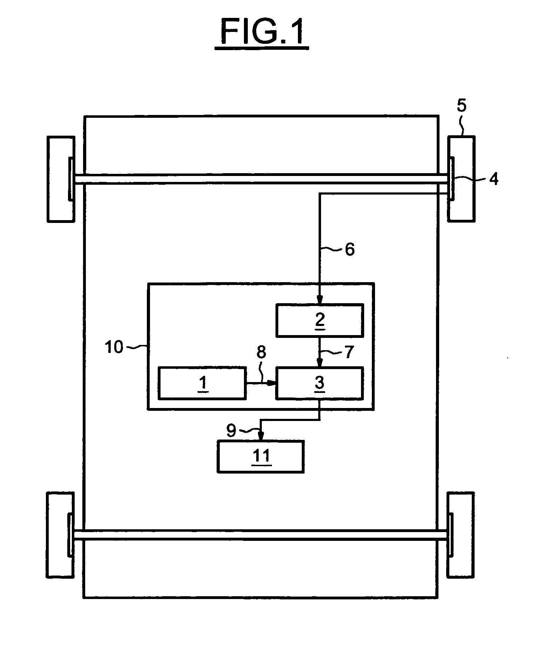

Tel qu'illustré sur la figure 1, un dispositif de détection 10 comprend une mémoire 1, un moyen de détermination 2 d'une signature courante et un moyen de comparaison 3 entre la signature courante et la signature de référence.

Le dispositif comprend également un capteur de vitesse 4 relié à la roue 5 munie d'un pneumatique. Le moyen de détermination 2 est relié par au moins une de ses entrées au capteur de vitesse 4 et par au moins une de ses sorties au moyen de comparaison 3. Ledit moyen de comparaison 3 est également connecté par une de ses entrées à la mémoire 1 par la connexion 8, et émet par au moins une de ses sorties un signal à destination de l'interface avec le conducteur 11 par l'intermédiaire de la connexion 9.

Le capteur de vitesse 4 comprend une partie tournante et une partie non tournante. Des repères angulaires sont liés à la partie tournante du capteur, et se déplacent en succession par rapport à la partie non tournante dudit capteur. Des interactions différentes peuvent lier repères angulaires et partie non tournante. Par exemple, une interaction magnétique peut être utilisée pour détecter le passage d'un repère angulaire.

Lors du passage d'un tel repère, un front montant apparaît sur le signal de sortie du capteur, l'amplitude du signal augmentant alors que la distance entre le repère angulaire et la partie non tournante se réduit. Lorsque le repère s'éloigne et que la distance augmente, un front descendant apparaît alors que l'amplitude du signal diminue.

Les repères étant espacés d'un angle constant sur une rotation complète de la roue, le signal généré comprend une succession de fronts montants et descendants. D'une rotation à la suivante, les mêmes repères génèrent les mêmes oscillations. D'une rotation à la suivante, le signal est le même faisant apparaître une périodicité du signal selon un tour complet de roue.

Lorsque le véhicule se déplace, le capteur de vitesse 4 émet le signal oscillant et périodique vers le moyen de détermination 2. Le moyen de détermination 2, analyse ledit signal oscillant et en extrait une signature courante. La signature courante correspond au signal reçu lors d'une rotation complète de la roue. L'origine de la rotation peut être déterminée par plusieurs moyens, généralement par un repère angulaire différent des autres repères angulaires et permettant de d'attribuer une correspondance physique entre les différents repères angulaires et les oscillations du signal.

La signature courante est alors transmise au moyen de comparaison 3. Le moyen de comparaison 3 reçoit également une signature de référence stockée dans la mémoire 1. Ladite signature de référence est un signal oscillant et périodique de la même nature que la signature courante générée par le moyen de détermination 2. La signature de référence diffère de la signature courante par le fait qu'elle ne relève que du capteur, repères angulaires et partie non tournante, et pas du pneumatique ou des interactions entre le dit pneumatique et la roue ou la chaussée.

La signature de référence est indépendante des conditions de roulage et de la vitesse de roulage. Elle est déterminée dans un environnement contrôlé, soit sur un banc de roulage, soit lors d'un essai de roulage en conditions contrôlées.

Le moyen de comparaison 3 calcule alors l'écart entre la signature de référence et la signature courante. Cet écart est caractéristique de l'état de gonflage du pneumatique. Ledit écart est alors comparé à un niveau de seuil mémorisé afin de détecter si une perforation du pneumatique a eu lieu. Lorsque une perforation du pneumatique est détectée, un signal d'alerte est transmis au moyen d'interface 11 avec le conducteur par la connexion 9.

Un enchaînement de plusieurs phases mène à la perforation. L'extrémité de l'objet perforant comprime localement le pneumatique. La pression locale augmente jusqu'à la limite de résistance du pneumatique. Lorsque la limite de résistance est franchie, l'objet perforant pénètre le pneumatique. Les causes de la compression ayant disparues, la pression locale reprend une valeur cohérente avec la pression globale du pneumatique.

Le moyen de comparaison 3 détecte ladite augmentation de pression locale précédant la perforation du pneumatique d'après le signal reçu du capteur de vitesse. Le moyen de comparaison 3 surveille toute augmentation de la pression supérieure à un seuil mémorisé et limitée dans le temps. L'augmentation de la pression est d'autant plus aisé à détecter sur le signal issu du moyen de comparaison que la contribution au signal du capteur de vitesse est retranchée. Ainsi, seul le signal dû au pneumatique est pris en compte lors de la détection. Le signal, d'amplitude normalement faible, voit son amplitude augmenter fortement préalablement à une perforation.

L'augmentation étant limitée dans le temps, il est également possible de localiser la perforation en localisant l'augmentation de pression l'ayant précédée. Pour cela, on localise les repères angulaires correspondants aux mesures de pression affectées par ladite augmentation de pression.

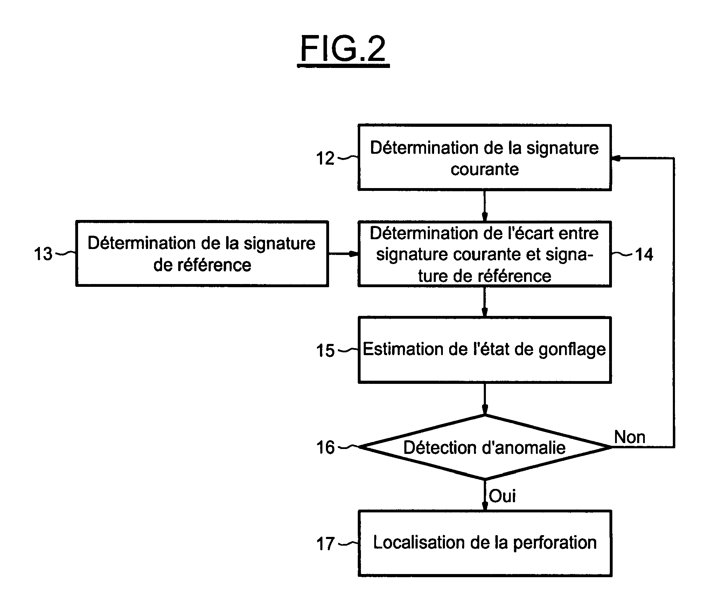

La figure 2 illustre les principales étapes du procédé de détection d'une perforation et d'estimation du gonflage. Le procédé commence à l'étape 12 par la détermination de la signature courante. A l'étape 13, la signature de référence est reçue et comparée à la signature courante, à l'étape 14, afin de déterminer l'écart entre la signature courante et la signature de référence. A l'étape 15, l'état de gonflage du pneumatique est estimé d'après l'écart calculé à l'étape 14. A l'étape 16, l'état de gonflage est surveillé par l'intermédiaire d'une comparaison de l'écart calculé à l'étape 14 avec un niveau de seuil. Si ledit seuil est dépassé, une perforation est détectée et localisée à l'étape 17. A l'étape 18, le conducteur est informé de l'occurrence de la perforation et de la localisation de ladite perforation. Si aucune perforation n'est détectée à l'étape 16 le procédé reprend à l'étape 12.

D'un point de vue plus large, il est possible d'estimer l'état de gonflage de chaque pneumatique d'après l'écart entre la signature courante et la signature de référence. Notamment, l'estimation de pression est réalisée de façon absolue, et non par rapport à la pression d'un autre pneumatique. On peut ainsi s'affranchir des limitations inhérentes à un dégonflage simultané de plusieurs pneumatiques.

De même, l'écart étant calculable en temps réel, l'estimation de l'état de gonflage du pneumatique et la détection d'une perforation dudit pneumatique peuvent être réalisées également en temps réel.

Enfin, il est possible d'appliquer le procédé de détection à des cas plus complexes, comme par exemple l'estimation de gonflage ou la détection de perforation appliquées à des pneumatiques cloutés. La répartition des clous à la surface d'un pneumatique clouté est régulière et périodique. Lors de la rotation d'un tel pneumatique, il apparaît sur la signature courante une augmentation localisée de la pression lors du passage d'un des clous entre le pneumatique et la chaussée.

En appliquant le procédé décrit précédemment, il est possible de distinguer une roue équipée d'un pneumatique clouté d'une roue équipée d'un pneumatique non clouté. Pour cela, on surveille le niveau du signal par rapport à un niveau déterminé préalablement. Si le niveau du signal est continuellement au dessus du niveau prédéterminé, le pneumatique est clouté.

Une alternative peut être d'intégrer le signal dû aux clous du pneumatique dans la signature de référence. Ainsi, l'écart entre la signature courante et la signature de référence présente un niveau faible. Si le pneumatique n'est pas clouté, la signature de référence n'est pas adaptée et l'écart entre la signature de référence et la signature courante est important. Le niveau de l'écart permet de discriminer un pneumatique non clouté d'un pneumatique clouté. Par ailleurs, le reste du procédé décrit précédemment peut être appliqué, y compris la détection d'une crevaison par augmentation ponctuelle du niveau du signal.

Enfin, une autre alternative peut être d'analyser la répartition spectrale en fréquence de la signature courante. En réalisant une transformée de Fourier, il est possible d'obtenir une répartition du signal par fréquence. Les clous d'un pneumatique étant repartis à espace angulaire fréquent, leur contribution au signal obtenu sur une rotation de roue est périodique, la période dépendant de l'écart angulaire entre deux repères et du diamètre du pneumatique. La présence d'une contribution présentant ladite périodicité peut alors être utilisée comme moyen de distinction entre un pneumatique clouté et un pneumatique non clouté.

## Revendications

1. Dispositif de détection de l'état du gonflage d'un pneumatique d'au moins une roue (5) de véhicule automobile comprenant :
une mémoire (1) contenant une signature de référence constituée par un signal périodique correspondant à un gonflage et à des conditions de roulage de référence,
un moyen de détermination (2) d'une signature courante constituée par un signal périodique correspondant à un gonflage et à des conditions de roulage courants,
un moyen de comparaison (3) entre la signature courante et la signature de référence, capable d'émettre en sortie un signal dépendant d'un écart entre la signature courante et la signature de référence, **caractérisé en ce qu'**il comprend un capteur (4) de la vitesse de rotation de ladite roue (5), muni de marqueurs angulaires et d'un moyen de détection desdits marqueurs angulaires, le moyen de détermination (2) d'une signature courante étant capable de déterminer un signal dépendant de l'état de gonflage du pneumatique, en fonction d'un signal reçu du capteur (4) de vitesse et dépendant du passage en succession des marqueurs angulaires.

2. Dispositif de détection selon la revendication précédente, dans lequel le moyen de comparaison (3) entre la signature courante et la signature de référence comprend un dispositif de localisation de la position angulaire des marqueurs correspondant à la localisation de l'augmentation de pression détectée.

3. Procédé de détection de l'état de gonflage d'un pneumatique d'au moins une roue de véhicule automobile dans lequel
on mémorise une signature de référence, constituée par un signal périodique dépendant du passage en succession de marqueurs angulaires équipant ladite roue (5), ledit signal correspondant à un gonflage et à des conditions de roulage de référence,
on détermine une signature courante d'une roue (5) constituée par un signal périodique dépendant du passage en succession de marqueurs angulaires équipant ladite roue, ledit signal correspondant à un gonflage et à des conditions de roulage courants,
on détermine un écart entre ladite signature courante et la signature de référence mémorisée,
et on en déduit l'état de gonflage du pneumatique.

4. Procédé de détection selon la revendication 3, dans lequel on détermine l'écart entre la signature de référence et la signature courante en réalisant la différence point à point entre la signature courante et la signature de référence.

5. Procédé de détection selon l'une des revendications 3 à 4, dans lequel on détermine en temps réel l'écart entre la signature courante et la signature de référence mémorisée.

6. Procédé de détection selon l'une des revendications 3 à 5, appliqué à l'ensemble des pneumatiques du véhicule dans on détermine l'écart entre la signature courante et la signature de référence mémorisée pour chaque pneumatique de façon individuelle.

7. Procédé de détection selon l'une des revendications 3 à 6, dans lequel on émet un signal de détection d'une perforation si on détecte une augmentation ponctuelle et limitée dans le temps de l'écart entre la signature de référence et la signature courante.

8. Procédé de détection selon l'une des revendications 3 à 7, appliqué à un véhicule équipé de pneumatiques cloutés, dans lequel la signature de référence intègre la contribution des clous du pneumatique.

## Patentansprüche

1. Vorrichtung zur Erfassung des Füllzustands eines Luftreifens mindestens eines Kraftfahrzeugrads (5), die enthält:
einen Speicher (1), der eine Bezugssignatur enthält, die aus einem periodischen Signal entsprechend einer Befüllung und
Bezugsfahrbedingungen besteht,
eine Bestimmungseinrichtung (2) einer laufenden Signatur, die aus einem periodischen Signal entsprechend einer Befüllung und laufenden Fahrbedingungen besteht,
eine Vergleichseinrichtung (3) zwischen der laufenden Signatur und der Bezugssignatur, die am Ausgang ein Signal senden kann, das von einer Abweichung zwischen der laufenden Signatur und der Bezugssignatur abhängt,
**dadurch gekennzeichnet, dass** sie einen Sensor (4) der Drehgeschwindigkeit des Rads (5) enthält, der mit Winkelmarkierern und mit einer Erfassungseinrichtung der Winkelmarkierer versehen ist, wobei die Bestimmungseinrichtung (2) einer laufenden Signatur ein vom Füllzustand des Luftreifens abhängiges Signal entsprechend einem vom Geschwindigkeitssensor (4) empfangenen und vom aufeinanderfolgenden Durchgang der Winkelmarkierer abhängigen Signal bestimmen kann.

2. Vorrichtung nach dem vorhergehenden Anspruch, wobei die Vergleichseinrichtung (3) zwischen der laufenden Signatur und der Bezugssignatur eine Lokalisierungsvorrichtung der Winkelstellung der Markierer entsprechend der Lokalisierung des erfassten Druckanstiegs enthält.

3. Verfahren zur Erfassung des Füllzustands eines Luftreifens mindestens eines Kraftfahrzeugrads, wobei
eine Bezugssignatur gespeichert wird, die aus einem periodischen Signal besteht, das vom aufeinanderfolgenden Durchgang von das Rad (5) bestückenden Winkelmarkierern abhängt, wobei das Signal einer Befüllung und Bezugsfahrbedingungen entspricht,
eine laufende Signatur eines Rads (5) bestimmt wird, die aus einem periodischen Signal besteht, das vom aufeinanderfolgenden Durchgang von das Rad bestückenden Winkelmarkierern abhängt, wobei das Signal einer Befüllung und laufenden Fahrbedingungen entspricht,
eine Abweichung zwischen der laufenden Signatur und der gespeicherten Bezugssignatur bestimmt wird,
und der Füllzustand des Luftreifens davon abgeleitet wird.

4. Erfassungsverfahren nach Anspruch 3, wobei die Abweichung zwischen der Bezugssignatur und der laufenden Signatur bestimmt wird, indem die Punktfür-Punkt-Differenz zwischen der laufenden Signatur und der Bezugssignatur hergestellt wird.

5. Erfassungsverfahren nach einem der Ansprüche 3 bis 4, wobei die Abweichung zwischen der laufenden Signatur und der gespeicherten Bezugssignatur in Echtzeit bestimmt wird.

6. Erfassungsverfahren nach einem der Ansprüche 3 bis 5, angewendet an die Gesamtheit der Luftreifen des Fahrzeugs, wobei die Abweichung zwischen der laufenden Signatur und der gespeicherten Bezugssignatur für jeden Luftreifen einzeln bestimmt wird.

7. Erfassungsverfahren nach einem der Ansprüche 3 bis 6, wobei ein Erfassungssignal einer Perforation gesendet wird, wenn eine punktuelle und zeitlich begrenzte Erhöhung der Abweichung zwischen der Bezugssignatur und der laufenden Signatur erfasst wird.

8. Erfassungsverfahren nach einem der Ansprüche 3 bis 7, angewendet an ein mit Spikereifen ausgestattetes Fahrzeug, wobei die Bezugssignatur den Beitrag der Spikestifte des Spikereifens umfasst.

## Claims

1. Device for detecting the inflation state of a tire of at least one wheel (5) of a motor vehicle, comprising:
a memory (1) containing a reference signature consisting of a periodic signal corresponding to an inflation and to reference running conditions,
a means (2) for determining a current signature consisting of a periodic signal corresponding to an inflation and to current running conditions,
a means (3) for comparing the current signature with the reference signature, capable of outputting a signal depending on a difference between the current signature and the reference signature, **characterized in that** it comprises a sensor (4) of the rotation speed of said wheel (5), furnished with angle markers and with a means for detecting said angle markers, the means (2) for determining a current signature being capable of determining a signal depending on the inflation state of the tire, as a function of a signal received from the speed sensor (4) and depending on the successive passage of the angle markers.

2. Detection device according to the preceding claim, wherein the means (3) for comparing between the current signature and the reference signature comprises a device for locating the angular position of the markers corresponding to the location of the detected pressure increase.

3. Method for detecting the inflation state of a tire of at least one wheel of a motor vehicle wherein
a reference signature is stored, consisting of a periodic signal depending on the successive passage of the angle markers furnishing said wheel (5), said signal corresponding to an inflation and to reference running conditions,
a current signature of a wheel is determined, consisting of a periodic signal depending on the successive passage of the angle markers furnishing said wheel, said signal corresponding to an inflation and to current running conditions,
a difference between said current signature and the stored reference signature is determined,
and the inflation state of the tire is deduced therefrom.

4. Detection method according to Claim 3, wherein the difference between the reference signature and the current signature is determined by producing the point-to-point difference between the current signature and the reference signature.

5. Detection method according to either of Claims 3 and 4, wherein the difference between the current signature and the stored reference signature is determined in real time.

6. Detection method according to one of Claims 3 to 5, applied to all of the tires of the vehicle wherein the difference between the current signature and the stored reference signature is determined for each tire individually.

7. Detection method according to one of Claims 3 to 6, wherein a puncture-detection signal is transmitted if an isolated and time-limited increase in the difference between the reference signature and the current signature is detected.

8. Detection method according to one of Claims 3 to 7, applied to a vehicle fitted with studded tires, wherein the reference signature includes the contribution of the studs of the tire.
